# EUROPEAN PATENT APPLICATION

(11) **EP 1 564 778 A1**
(43) Date of publication of application: **17.08.2005**
(21) Application number: 05003199.6
(22) Date of filing: 15.02.2005
(51) Int. Cl.: H01J 17/49, C03C 3/072, C03C 4/16

(54) **Plasma display panel**

(30) Priority: 16.02.2004 JP 2004038236
(71) Applicant: MATSUSHITA ELECTRIC INDUSTRIAL CO., LTD., Kadoma-shi, Osaka 571-8501 (JP)
(72) Inventor: Morita, Osamu, Osaka 538-0052 (JP); Tani, Naoyuki, Yao-shi Osaka 581-0011 (JP); Mifune, Tatsuo, Katano-shi Osaka 576-0054 (JP)
(74) Representative: Grünecker, Kinkeldey, Stockmair & Schwanhäusser Anwaltssozietät

(57) **Abstract**

In a plasma display panel containing a front plate having an dielectric glass layer for covering display electrodes formed on a transparent substrate, the glass composition forming the dielectric layer contains titanium. The glass composition should preferably contain 0.9 - 6.7 wt% of TiO₂ on the basis of the weight of an oxide, further preferably, contain 2.6 - 5.5 wt% of TiO₂ on the basis of the weight of an oxide.

## Description

### TECHNICAL FIELD

The present invention relates to a plasma display panel used for wall-mount TVs or large monitors.

### BACKGROUND ART

A plasma display panel is a display device with an excellent visibility, large screen, and low-profile, lightweight body. An AC type surface discharge plasma display panel, which has dominance in plasma display panels (hereinafter simply referred to as a panel), contains a front plate and a back plate oppositely disposed with each other, and a plurality of discharge cells therebetween. On a front glass substrate of the front plate, scan electrodes and sustain electrodes-a pair of each electrode forms a display electrode-are arranged in parallel with each other, and over which, a dielectric layer and a protecting layer are formed to cover the display electrodes. On the other hand, on a back glass substrate of the back plate, data electrodes are disposed in a parallel arrangement, and over which, a dielectric layer is formed to cover the data electrodes. On the dielectric layer between the data electrodes, a plurality of barrier ribs is formed in parallel with the arrays of the data electrodes. Furthermore, a phosphor layer is formed between the barrier ribs and on the side surfaces of the dielectric layer. The front plate and the back plate are sealed with each other so that the display electrodes are orthogonal to the data electrodes in the narrow space, i.e., the discharge space, between the two plates. The discharge space is filled with a discharge gas. In the panel structured above, gas discharge occurred in each discharge cell generates ultraviolet light, by which phosphors responsible for red, green, and blue are excited to generate visible light of respective colors. The visible light is taken to the outside through the front plate for displaying images.

Through the process above, to obtain images with high luminance, the visible light generated in the discharge cells has to be effectively collected. That is, it is important that the front plate has high transmittance of visible light. However, in a conventional front plate, the dielectric layer covering the display electrodes has poor transmittance of visible light. From the reason, display images with low luminance have been a pending problem.

To address the problem above, the inventors disclosed a new glass composition in Japanese Patent Unexamined Publication No. 2003-267751. Employing the glass composition for a dielectric layer allows the front plate to have high transmittance, thereby providing a front plate with higher transmittance. The glass composition contains 40 - 64 wt% of PbO, 7 - 22 wt% of SiO₂, 6 - 26 wt% of B₂O₃, 2 - 19 wt% of BaO, and 3 - 7 wt% of Al₂O₃ on the basis of the weight of an oxide.

A dielectric composition containing titanium has been conventionally well known. Such a composition is, for example, disclosed in Japanese Patent Unexamined Publication No. H03-69196. However, due to poor transmittance of light, the dielectric composition above is not suitable for a front plate in practical use.

A front plate formed of the aforementioned glass composition has a problem-compared to an improved transmittance for red and green, the transmittance for blue was less than expected. Generally, the blue phosphor employed for a panel has a luminous intensity lower than those of other phosphors. The luminance of display images after white-balance control depends on the maximum luminance of blue light. The poor transmittance of blue light weakens efforts toward increasing luminance of a panel by the improvements in the transmittance of the front plate. Therefore, even if the transmittance of red and green is increased, as long as the transmittance of blue light remains low, the luminance as a whole of a panel has not satisfactorily improved.

The present invention addresses the problem. It is therefore the object of the invention to provide a plasma display panel capable of displaying images with high luminance by increasing transmittance of visible light-particularly, increasing transmittance of blue light-passing through the front plate.

### DISCLOSURE OF THE INVENTION

To address the problem above, the plasma display panel of the present invention contains a front plate having a dielectric glass layer for covering at least display electrodes formed on an transparent substrate, a back plate confronting to the front plate, and discharge cells formed between the front plate and the back plate. The dielectric glass layer of the panel is formed of a glass composition containing titanium.

### BRIEF DESCRIPTION OF THE DRAWINGS

Fig. 1 is an exploded perspective view of the structure of a plasma display panel of an embodiment of the present invention.
Fig. 2 is a section view illustrating the structure of the panel.
Fig. 3 is a graph showing the transmittance relationship between TiO₂ content and visible light having a wavelength of 410 nm.

### DETAILED DESCRIPTION OF CARRYING OUT OF THE INVENTION AN EXEMPLARY EMBODIMENT

The plasma display device of an embodiment of the present invention is described hereinafter with reference to the accompanying drawings.

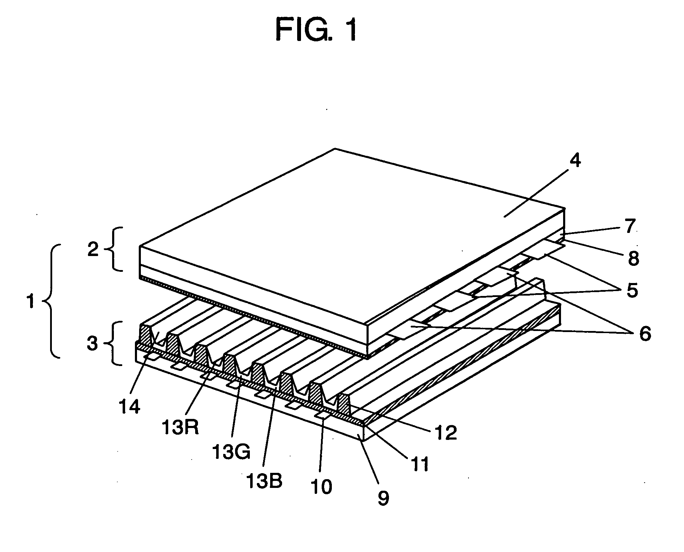

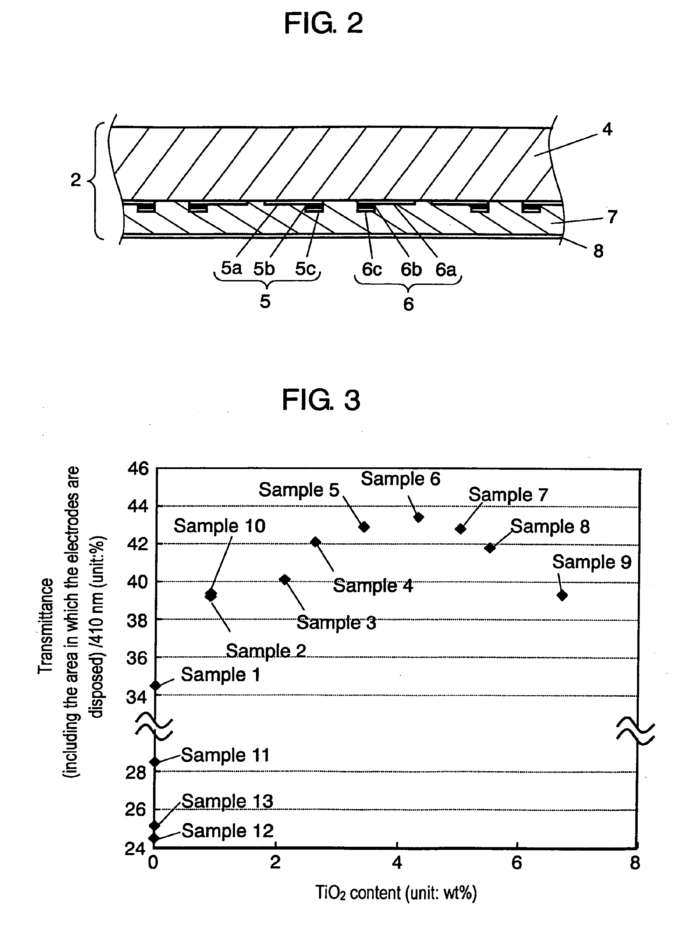

Fig. 1 is an exploded perspective view of the structure of a plasma display panel of the embodiment of the present invention. Fig. 2 is a section view illustrating the structure of the panel. Plasma display panel 1 has front plate 2 and back plate 3 in an opposite arrangement via a discharge space. On front plate 2, a plurality of pairs of scan electrodes 5 and sustain electrodes 6 is formed in parallel on front glass substrate 4, and each pair forms a display electrode. Each of scan electrodes 5 is formed of, as shown in Fig. 2, transparent electrode 5a, black bus line 5b disposed on transparent electrode 5a, and metallic bus line 5c disposed on black bus line 5b; similarly, each of sustain electrodes 6 is formed of transparent electrode 6a, black bus line 6b disposed on transparent electrode 6a, and metallic bus line 6c disposed on black bus line 6b. Scan electrodes 5 and sustain electrodes 6 are covered with dielectric layer 7, and over which, protective layer 8 is disposed to cover dielectric layer 7. On back plate 3, a plurality of data electrodes 10 is formed in parallel on back glass substrate 9 so as to be orthogonal to scan electrodes 5. The array of data electrodes 10 is covered with dielectric layer 11, and on which, barrier ribs 12 are formed in parallel to data electrodes 10. Phosphor layers, i.e., red phosphor-coated 13R, green phosphor-coated 13G, and blue phosphor-coated 13B, are formed on the surface of dielectric layer 11 and the side surfaces of barrier ribs 12. At an intersection of the display electrodes (that is, each pair of scan electrodes 5 and sustain electrodes 6) and data electrodes 10 in the discharge space, discharge cells each of which is responsible for red, green, and blue are formed. The discharge space is filled with a discharge gas, such as argon, and xenon.

Here will be described dielectric layer 7 used in the embodiment. First, the glass composition is prepared through the process below. Mix the following substances in predetermined amounts: rutile as a material for titanium, minium as lead, silica sand as silicon, boric anhydride as boron, barium nitrate as barium, alumina as aluminium. Melt the mixture in a furnace at 1600 °C to obtain a glass base. Cool the melted glass base down to 1100 - 1300 °C in a clarifying tank before taking the mixture out of the furnace. Crush the mixture into a cullet, then mill it with a hammer mill, and further finely mill it with a jet mill to obtain glass powder. Preferably, the maximum particle diameter of the glass powder should be, as is the diameter of the glass composition described in Japanese Patent Unexamined Publication No. 2003-267751, 16 µm or less, at the same time, the particle size distribution of the glass powder preferably has two peaks: 0.9 - 1.3 µm and 5 - 6 µm. In the coating film-forming process, closely piling such properly formed glass powder can decrease residual bubbles in the dielectric layer. The glass powder has a softening point of 600 °C or lower, and thermal expansion coefficient at 30 - 300 °C measures 68 - 86 x 10⁻⁷/ °C. Aforementioned description of the materials for the glass composition is an example; other materials can be employed for each composition, as long as the finally prepared glass powder contains each composition in the required amount below. For example, following materials can be substitutes for those described above: anatase as a material for titanium, barium carbonate as barium, and aluminum hydroxide.

Next, blend resin and solvent into the glass powder, using a triple roller or the like, to obtain glass paste with uniformity. Although the glass paste above has a mixing ratio of 65 wt% of glass powder, 4 wt% of ethyl cellulose as a resin, and 31 wt% of α-terpineol as a solvent, it is not limited thereto. Of the materials listed below, one kind, or a combination of two or more can be used for resin: cellulose-based resin including nitrocellulose, ethyl cellulose, hydroxy ethyl cellulose; acrylic resin including polybutyl acrylate, polymethacrylate; copolymers including polyvinyl alcohol, polyvinylbutyral. As for solvent, of the materials listed below, one kind, or a combination of two or more can be used: terpene including α-terpeneol, β-terpeneol, γ-terpeneol; ethylene glycol mono alkyl ether; ethylene glycol dealkyl ether; diethylene glycol mono alkyl ether; diethylene glycol dealkyl ether; ethylene glycol mono alkyl ether acetate; ethylene glycol dealkyl ether acetate; diethylene glycol mono alkyl ether acetate; diethylene glycol dealkyl ether acetate; propylene glycol mono alkyl ether; propylene glycol dealkyl ether; propylene glycol mono alkyl ether acetate; propylene glycol dealkyl ether acetate; alcohol including methanol, ethanol, isopropanol, 1-butanol.

As the following step, apply the dielectric paste obtained above to front glass substrate 4 so as to cover the array of scan electrodes 5 and sustain electrodes 6 by screen printing, and dry the paste at 70 - 110 °C with a far-infrared heating dryer. After that, sinter the paste at 500 - 600 °C to form the dielectric glass layer. Instead of screen printing, the dielectric paste may be applied by spraying, blade coating, or die coating. Similarly, the paste may be dried by using a hot plate or a hot-air dryer, instead of the far-infrared heating dryer. Through the process, dielectric layer 7 is formed.

To determine the optimum amount of titanium for dielectric layer 7 of the embodiment, the inventors measured the transmittance of visible light, using samples containing different amount of titanium. Table 1 shows the glass composition of 10 samples measured in the experiment. Sample 1 contains no titanium, whereas samples 2 through 9 contains titanium in different amounts. To improve the transmittance of visible red and green light, the samples contain 42 - 64 wt% of PbO, 7 - 22 wt% of SiO₂, 6 - 26 wt% of B₂O₃, 2 - 19 wt% of BaO, and 3 - 7 wt% of Al₂O₃ on the basis of the weight of an oxide. Sample 10 is prepared for examining how the compositions other than titanium affect the transmittance. Samples 11 through 13 are prepared for examining the compositions without TiO₂ affect the transmittance.

**[Table 1]**

| Sample No. | TiO₂ | PbO | SiO₂ | B₂O₃ | BaO | Al₂O₃ |
|---|---|---|---|---|---|---|
| 1 | 0.0 | 47.3 | 8.2 | 22.1 | 18.1 | 4.3 |
| 2 | 0.9 | 46.4 | 8.4 | 20.3 | 17.5 | 6.5 |
| 3 | 2.1 | 46.2 | 7.9 | 20.6 | 16.5 | 6.7 |
| 4 | 2.6 | 46.3 | 8.1 | 20.9 | 17.3 | 4.8 |
| 5 | 3.4 | 45.5 | 8.0 | 19.7 | 18.0 | 5.4 |
| 6 | 4.3 | 45.0 | 7.5 | 20.8 | 16.1 | 6.3 |
| 7 | 5.0 | 42.2 | 8.1 | 25.6 | 15.3 | 3.8 |
| 8 | 5.5 | 43.1 | 8.3 | 22.8 | 16.2 | 4.1 |
| 9 | 6.7 | 42.1 | 7.8 | 22.0 | 17.7 | 3.7 |
| 10 | 0.9 | 64.0 | 22.2 | 6.1 | 2.1 | 4.7 |
| 11 | 0.0 | 60.4 | 24.7 | 5.5 | - | 0.2 |
| 12 | 0.0 | 67.3 | 28.2 | 2.2 | - | - |
| 13 | 0.0 | 55.8 | 4.94 | 17.4 | - | 8 |
| (unit: wt%) | | | | | | |

The samples were prepared through the following steps. As the first step for forming transparent electrodes, a transparent conductive material made of indium-tin-oxide (ITO) was deposited over the entire surface of the glass substrate by sputtering so as to have a thickness of 0.12 µm. Next, a photoresist layer was formed over the ITO film. Photolithography was then used to pattern the electrodes by exposing a photoresist to light through a photomask. In this way, stripe-shaped, 250 µm-width ITO electrodes were formed. Each interval between the electrodes measured 100 µm.

Next, photosensitive black paste was applied over the entire surface of the glass substrate. 100 µm-width black lines were formed on the ITO electrodes by photolithography and then baked at 550 °C to form black bus lines. As for photosensitive black paste, for example, Japanese Patent Unexamined Publication No. H10-255670 discloses the paste containing ruthenium oxide.

The entire surface was coated with photosensitive silver paste. Ag bus lines having a width of 100 µm were formed on the black bus lines by photolithography again, and the Ag bus lines were baked at 550 °C. Metal bus lines were thus formed.

Through the process above, the display electrodes were formed on the glass substrate. The dielectric paste samples having 9 different compositions as shown in Table 1 were applied over the glass substrate by screen printing. Next, the dielectric paste was dried at 70 - 110 °C by a far-infrared heating drier, and further baked at 600 °C to form a dielectric layer.

The measurement of transmittance of visible light was carried out on the 9 samples above. Of the entire surface of the dielectric layer, an opaque section-where the black bus lines and metal bus lines are disposed-occupies about half the entire area. In the experiment, the result was obtained as the transmittance (%) of visible light through the dielectric layer, with the opaque section included. It will be understood that the maximum value does not reach 100%.

Fig. 3 is a graph showing the transmittance relationship between TiO₂ content and visible light having a wavelength of 410 nm.

As is apparent from the graph, transmittance of visible light having a wavelength of 410 nm, i.e., the transmittance of blue light is significantly improved in the titanium-contained samples.

It has not yet clarified the mechanism that containing titanium improves the transmittance of visible light; titanium can contribute to decrease in minute bubbles in the dielectric layer, or titanium can suppress a reaction between the black, or metal bus lines and the dielectric glass, preventing the transmittance of the blue light from degradation.

Containing an excessive amount of titanium, however, reduces the transmittance due to precipitation of titanium. That is, to improve the transmittance of the blue light, the titanium content should be properly determined. As shown in the graph of Fig. 3, containing titanium of 0.9 - 6.7 wt% increased the transmittance of blue light to 38 % or higher. Compared to the blue light-transmittance of 34.5% in the dielectric layer containing no titanium, 10% or higher improvement effect on transmittance is achieved. Furthermore, containing titanium of 2.6 - 5.5 wt% achieved 41% or higher transmittance of blue light. Compared to 34.5% of the dielectric layer containing no titanium, the improvement effect is beyond 20%.

As described above, improving the transmittance of blue light leads to increase in luminance, providing a plasma display panel capable of displaying images with an excellent visibility.

According to the present invention, enhancing transmittance of visible light-particularly, the transmittance of blue light-passing through the front plate allows the plasma display panel to offer excellent display with high luminance.

### INDUSTRIAL APPLICABILITY

The plasma display panel of the present invention contains the front plate having transmittance of blue light raised as high as that of red and green light. With the structure, the plasma display panel can provide excellent images with high luminance and visibility, which is suitable for display devices, such as hang-on-the-wall TVs, and large monitors.

### Reference numerals in the drawings

- 1 :: Panel
- 2:: Front plate
- 3:: Back plate
- 4:: Front glass substrate

## Claims

1. A plasma display panel comprising a front plate having a dielectric glass layer on display electrodes formed on an transparent substrate, a back plate confronting to the front plate so as to form discharge cells therebetween,
wherein, a glass composition forming the dielectric glass layer includes titanium.

2. The plasma display panel of Claim 1, wherein the glass composition includes not less than 0.9 wt% and not more than 6.7 wt% of TiO₂ on a basis of a weight of an oxide.

3. The plasma display panel of Claim 2, wherein the glass composition includes not less than 2.6 wt% and not more than 5.5 wt% of TiO₂ on a basis of a weight of an oxide.

4. The plasma display panel of Claim 2, wherein the glass composition includes, on a basis of a weight of an oxide, not less than 40 wt% and not more than 64 wt% of PbO; not less than 7 wt% and not more than 22 wt% of SiO₂; not less than 6 wt% and not more than 26 wt% of B₂O₃; not less than 2 wt% and not more than 19 wt% of BaO; and not less than 3 wt% and not more than 7 wt% of Al₂O₃.

5. The plasma display panel of Claim 1, wherein the display electrodes contain a lower layer of a metallic electrode, and an upper layer of a black bus line.
